(19) Europäisches Patentamt
European Patent Office
Office européen des brevets

(11) **EP 1 763 564 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(51) Int Cl.:
*C08J 7/04* (2006.01)        *B32B 27/30* (2006.01)
*B32B 15/082* (2006.01)      *C09D 127/08* (2006.01)

(21) Anmeldenummer: **05758906.1**

(22) Anmeldetag: **21.06.2005**

(86) Internationale Anmeldenummer:
**PCT/EP2005/006665**

(87) Internationale Veröffentlichungsnummer:
**WO 2006/000375 (05.01.2006 Gazette 2006/01)**

(54) **VERBUNDFOLIE MIT EINER BESCHICHTUNG AUF BASIS VON POLYVINYLIDENCHLORID, VERFAHREN ZUR IHRE HERSTELLUNG UND IHRE VERWENDUNG**

COMPOSITE FILM WITH A POLYVINYLIDENE CHLORIDE COATING, PROCESS FOR PRODUCING IT AND USE THEREOF

FEUILLE COMPOSITE AVEC UN REVETEMENT A BASE DE POLYCHLORURE DE VINYLIDENE, PROCEDE POUR LA PRODUIRE ET SA UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.06.2004 DE 102004030981**

(43) Veröffentlichungstag der Anmeldung:
**21.03.2007 Patentblatt 2007/12**

(73) Patentinhaber: **Klöckner Pentaplast GmbH**
**56412 Heiligenroth (DE)**

(72) Erfinder:
• **MÜNSTER, Jochen**
**CH-3323 Bäriswil (CH)**

• **JENNI, Hans-Jörg**
**CH-2504 Biel (CH)**

(74) Vertreter: **Zounek, Nikolai et al**
**Plate Schweitzer Zounek**
**Patentanwälte**
**Rheingaustrasse 196**
**65203 Wiesbaden (DE)**

(56) Entgegenhaltungen:
WO-A-91/03518        DE-A1- 1 519 433
DE-A1- 2 012 349     US-A- 3 891 598

**Beschreibung**

Die Erfindung betrifft eine Verbundfolie auf Basis von Polyvinylidenchlorid , ein Verfahren zu Herstellung einer Verbundfolie und ihre Verwendung.

Mehrschichtverbunde, im Folgenden als "Verbunde" oder "Verbundfolien" bezeichnet, werden unter anderem zur Verpackung von Lebensmitteln und Pharmaprodukten eingesetzt. Häufig erfolgt eine Beschichtung der obersten Folie oder Lage solcher Verbunde mit Vinylidenchlorid-polymer- oder -copolymerdispersionen. Beispielsweise werden zur Verpackung von Pharma-produkten PVC-Folien oder PVC-PE-Verbundfolien mit Vinylidenchloridcopolymerdispersionen beschichtet und anschließend in einem Thermoformprozess zu Blistern verarbeitet, die dann mit dem Packgut befüllt und mit einer Aluminiumfolie oder einer dünnen Polymerdeckelfolie durch Versiegeln verschlossen werden. Vinylidenchloridmonomere werden meistens mit Methacrylaten, Acrylaten, Vinylchlorid oder Acrylnitril zu Copolymerenpolymerisiert. Aufgabe der Vinylidenchloridcopolymerbeschichtung ist die Bildung einer siegelfähigen Beschichtung und/oder Bildung einer Barriereschicht für Wasserdampf, Sauerstoff und Aromen.

Vinylidenchloridcopolymerdispersionen bilden Kunststofffilme, die im frischen Zustand, insbesondere dann, wenn sie keinen Wachs- oder anderen Gleitmittelzusatz enthalten, einerseits eine Blocktendenz, d.h. eine Neigung zum Anhaften an einer glatten Oberfläche, wie an dem nächsten Wickel einer Folienrolle, und andererseits sehr hohe Haft- und Gleitreibungskoeffizienten gegenüber Metallen, Kunststoffen und Naturstoffen aufweisen. Die Reibungskoeffizienten erniedrigen sich zwar, nachdem die Oberfläche der PVDC-Beschichtung durch die mehr oder weniger schnell einsetzende und fortschreitende Kristallisation härter geworden ist. Eine Tendenz zum Anhaften an Maschinenteilen oder mangelhaften Gleiteigenschaften beim Befüllen mit den Packgütern, insbesondere mit Gelatinekapseln, bleibt jedoch erhalten. Auch wird eine Tendenz zu einem unerwünschten Kleben der PVDC-Schicht an heißen Maschinenteilen, wie z.B. in der Heizzone von Thermoformmaschinen, beobachtet.

Die Blocktendenz führt dazu, dass nach dem Aufwickeln der Verbundfolie auf der weichen PVDC-Oberfläche Abklatschbilder entstehen, die durch den Kontakt mit dem nächsten Folienwickel entstehen. Ist die PVDC-Oberfläche sehr glatt, wie dies bei den heute für die PVDC-Dispersionsbeschichtung üblichen Raster- oder Haschurenwalzenauftragssystemen, falls keine gegensteuernden Maßnahmen getroffen sind, der Fall ist, entstehen durch die eingewickelte Luft größere Zonen mit glänzender Oberfläche, da der Kontakt zur nächsten Wicklung durch eingeschlossene Luftblasen verhindert wird. Daneben gibt es Zonen mit matter Oberfläche, die Kontakt zur nächsten Wicklung haben und in denen es demzufolge zu Abklatschbildern kommt. Die Abklatschbilder selbst führen zu keinem technischen Mangel in der PVDC-Beschichtung, jedoch werden solche Verbunde häufig aus ästhetischen Gründen nicht angenommen. In manchen Fällen kann allerdings bei PVDC-beschichteten Folien auch eine unerwünschte und gegebenenfalls zu Folgefehlern führende Deformation der Folien durch die eingewickelten Luftblasen entstehen.

In der Regel wird eine Verringerung dieses Effektes des Lufteinschlusses durch Aufbringen einer gezielten Oberflächenstruktur erreicht, die das seitliche Entweichen der Luft ermöglicht. Auch werden die Abklatschbilder, dadurch, dass sie im Wesentlichen immer auf den Wellenbergen der Oberflächenstruktur auftreten, gleichmäßiger über die ganze Folienfläche verteilt, und die Folie erhält so ein homogeneres Aussehen.

Die gezielte Erzeugung einer solchen Oberflächenstruktur bedingt den Einsatz von zusätzlicher Ausrüstung in einer Beschichtungsmaschine. Die Qualität der Struktur, d. h. der Rauhtiefe, des Aussehens, der mittleren Schichtdicke der obersten Folie des Verbundes muss durch Maschineneinstellungen gesteuert werden und in der Regel geht die Erzeugung einer Oberflächenstruktur im Vergleich zu einer glatten Oberfläche der Folie mit einem Verlust an Schichtdicke und damit gegebenenfalls einem Verlust an Produktivität einher. Das Aufbringen einer Oberflächenstruktur auf einer PVDC-beschichteten Folie ist wegen der Oberflächenunebenheiten nachteilig oder sogar unmöglich, wenn der beschichtete Verbund auf der PVDC-Seite einem weiteren Kaschier- oder Beschichtungsvorgang unterzogen wird.

Frisch beschichtete und aufgewickelte Verbundfolienrollen relaxieren im Laufe weniger Stunden oder Tage, indem sie an weniger straff gewickelten Abschnitten resp. an Stellen mit kleinerer Foliendicke etwas zusammenfallen und sich an Stellen mit größeren Foliendicken anspannen. Eine Folge der Blockneigung des frisch beschichteten PVDCs besteht darin, dass durch das mangelnde Gleitvermögen zwischen den Folienwicklungen und gleichzeitigem Relaxieren Spannungen entlang der Folienoberflächen auftreten, die bei zu hoher Blockneigung sogar zur Materialzerstörung durch Auftrennen der Verbundfolien in die einzelnen Folien bzw. Schichten führen können.

In der DE 100 64 800 A1 sind micronisierte Polyethylenwachse beschrieben, die durch Copolymerisation von Ethylen unter Hochdruckbedingungen unter Verwendung eines aliphatischen oder alicyclischen Ketons als Molekulargewichtsregler und anschließender Micronisierung hergestellt werden. Unter Micronisierung ist das Zerkleinern von Substanzen bis zu Partikelgrößen im Bereich von 1 $\mu$m bis maximal 100 $\mu$m zu verstehen. Die Substanzen werden durch Zermahlen oder Versprühen in die gewünschte Morphologie gebracht. Für micronisierte Polyethylenwachse sind zahlreiche Anwendungen bekannt, beispielsweise als Träger für Druckfarben, Überzüge, Abrasivum für Zahnpasten und Zusatz für kosmetische Präparate wie Lidschatten, Lippenstifte oder Rouge.

Die DE 43 16 025 A1 betrifft micronisiertes Polyethylenwachs einer mittleren Teilchengröße von 1 bis 30 $\mu$m, geeignet als Trennmittel zum Entkleben der Oberfläche klebriger Granulate. Das micronisierte Polyethylenwachs entfaltet seine Wirkung bereits in den geringen Mengen von 0,01 bis 2 Gew.-%, bezogen auf das Granulat. Die micronisierten Polyethylenwachse werden durch Versprühen einer betreffenden Polyethylenwachsschmelze mit Gasen in einer Zweistufendüse hergestellt.

Aus der EP 0 403 542 B1 ist eine polymere Zusammensetzung bekannt, die ein Vinylidenchloridinterpolymeres, gebildet aus einem Monomerengemisch, umfasst. Die Monomerenmischung enthält 60 bis 99 Gew.-% Vinylidenchlorid und 40 bis 1 Gew.-% wenigstens eines hiermit copolymerisierbaren ethylenartig ungesättigten Comonomeren. Das Vinylidenchloridinterpolymeres wird mit einem Formulierungspaket vermischt, das 0,1 bis 95 Gew.-%, bezogen auf das Gesamtgewicht des Formulierungspakets, eines Alkalimetallsalzes oder eines Erdalkalimetallsalzes einer schwachen Säure, ein Ethylenhomopolymeres und wenigstens einen Weichmacher und ein Gleitmittel enthält. Aus dem Vinylidenchloridinterpolymer können durch Gießen, Blasen, Extrusionsformen, Coextrusion, Laminieren oder Kalandrieren der polymeren Zusammensetzung Gegenstände hergestellt werden.

In der EP 0 736 067 B1 ist ein Verfahren zur Stabilisierung von PVDC enthaltenden Polyolefinmischungen und stabilisierte Polyolefinmischungen, die PVDC enthalten, beschrieben. Die Kunststoffmischung umfasst Polyolefine und 0,05 bis 20 Gew.-% PVDC und zumindest ein organisches Phosphit oder Phosphonit sowie mindestens ein Metallsalz einer Fettsäure.

Die DE 198 32 500 A1 betrifft eine thermoformbare Verbundfolie, die mindestens eine Cycloolefincopolymer enthaltende Folie und mindestens auf einer Seite darauf laminierte thermoplastische Folie umfasst. Die thermoformbare Folie ist mittels eines lösungsmittelfreien Einkomponentenklebers mit der Cycloolefincopolymer enthaltenden Folie verbunden. Die thermoplastische Folie enthält PVDC. Die Dicke der Gesamtfolie beträgt 100 bis 500 $\mu$m, die Dicke der PVC-Folie liegt im Bereich von 5 bis 150 $\mu$m und die Dicke der COC-Folie beträgt 50 bis 400 $\mu$m. Diese thermoformbare Verbundfolie wird zur Herstellung von Blisterverpackungen verwendet. Die thermoplastische Folie kann auch aus Polyolefin, Polyamid, Polyester, Polcarbonat, Polystyrol, Polyvinylchlorid und Polyurethan ausgewählt werden

DE 2012 349 offenbart eine Dispersion und daraus hergestellte Beschichtungen auf Basis von Polyvinylidenchlorid mit verminderter Siegelbackenhaftung bei Temperaturen um 120 °C. Die Dispersion enthält Partikel mit einem Durchmesser im Bereich von 0,01 bis 1 $\mu$, wobei die mittlere Partikelgröße vorzugsweise um einen Faktor 10 kleiner ist als die Dicke der Beschichtung.

Aus WO 91/03518 sind extrudierbare Vinylidenchlorid-Copolymere mit erhöhter Widerstandsfähigkeit gegenüber thermischer Degradation bekannt. Die für thermische Verfahren wie Extrusion, Blasextrusion, Spritzgießen, Gießen, Kalandrieren und Laminieren vorgesehenen Materialien auf Basis von Vinylidenchlorid-Copolymeren beinhalten pulverförmige anorganische Stabilisatoren, insbesondere $Mg(OH)_2$, mit einer Partikelgröße im Bereich von 1 bis 50 $\mu$.

JP 57-059756-A offenbart eine Beschichtung, die auf einem copolymerisierten Vinylidenchloridlatex aus 84 bis 96 % Vinylidenchlorid und 6 bis 15 % eines Monomers, wie Acrylsäure, Methacrylsäure, Vinylacetat oder Acrylnitril basiert und Partikel aus einem Polyolefin mit einem mittleren Durchmesser von 1 bis 20 $\mu$m enthält, wobei die Dicke der Beschichtung zu dem mittleren Partikeldurchmesser in einem Verhältnis von 0,5 bis 1 steht. Die Beschichtung ist vorgesehen für Papier und Folien für die Verpackung von Nahrungsmitteln, wobei die Folien aus Materialien, wie Polypropylen, Polyethylenterephthalat, Polyamid oder Cellulosederivaten bestehen.

JP 57-059757-A beschreibt eine Polyolefin-Partikel enthaltende Beschichtung aus einem copolymerisierten Vinylidenchloridlatex aus 70 bis 85 Gew.-% Vinylidenchlorid und 30 bis 15 Gew.-% Vinylchlorid sowie mindestens eines anderen Monomers, wobei das Verhältnis von Vinylchlorid zu dem Monomer zwischen 5:25 und 28:2 liegt. Die Polyolefin-Partikel haben eine durchschnittliche Größe von 1 bis 20 $\mu$m. Die Dicke der Beschichtung beträgt das 0,5- bis 1-fache der Partikelgröße. Die Beschichtung ist vorgesehen für Papier und Folien für die Verpackung von Nahrungsmitteln, wobei die Folien aus Materialien, wie Polypropylen, Polyethylenterephthalat, Polyamid oder Cellulosederivaten bestehen.

Aufgabe der Erfindung ist es, eine Beschichtung für Verbunde, insbesondere Verbundfolien zu schaffen, die geringe Haft- und Gleitreibungskoeffizienten zur Verbesserung der Gleiteigenschaften der Verbundfolie aufweisen und die Handhabung der in Maschinen zu beschichtenden Verbundfolien und deren Weiterverarbeitung in entsprechenden Maschinen erleichtern.

Diese Aufgabe wird durch eine Verdundfolie, gemäß Anspruch 1, mit einer Beschichtung auf Basis von Polyvinylidenchlorid in der Weise gelöst, dass Partikel aus Polymeren, Naturstoffen, modifizierten Naturstoffen, anorganischen Materialien oder Mischungen hiervon im Polyvinylidenchlorid enthalten sind.

Die Dichte der Partikel liegt dabei im Bereich von 0,1 bis 2,0 g/cm$^3$ und der mittlere Partikeldurchmesser im Bereich von 1 $\mu$m bis 100 $\mu$m.

Zweckmäßigerweise ist der größte Partikeldurchmesser gleich/größer als die Dicke der PVDC-Schicht.

In Weiterbildung der Erfindung sind die Partikel aus einer Gruppe enthaltend HDPE, LDPE, LLDPE, Polypropylen, PVDC, PVC , Polyamide, Polyurethane, Polyacrylate, Polystyrole, Polyacrylnitrile, Acrylniril-Butadiene-Styrol (ABS), Polytetrafluorethylen (PTFE), Künstharze, Hartwachse, Gemische und Copolymerisate hiervon ausgewählt.

In Ausgestaltung der Erfindung weisen die Partikel eine Oberflächenbeschichtung aus einem der Polymeren der Gruppe HDPE, LDPE, LLDPE, Polypropylen, PVDC, PVC, Polyamide, Polyurethane, Polyacrylate, Polystyrole, Polyacrylnitrile, Acrylnitril-Butadiene-Styrol-Polymerisate (ABS), Polytetrafluorethylen (PTFE), Kunstharze, Hartwachse, Gemische und Copolymerisate hiervon, auf

Die weitere Ausgestaltung der Erfindung ergibt sich aus den Merkmalen der Patentansprüche 2-11 und 20-21.

Das Verfahren zur Herstellung einer derartigen Verbundfolie, gemäß Anspruch 12, mit einen Beschichtung auf Basis von Polyvinylidenchlorid für bahnförmige Materialen zeichnet sich dadurch aus, dass eine PVDC-Dispersion vorgelegt wird, in die Partilcel direkt oder eine Partikeldispersion unter Rühren zudosiert werden bzw. wird. Zweckmäßigerweise wird die Partikeldispersion durch Einrühren eines Partikelpulvers in Wasser ohne oder mit' einem oder mehreren Emulgatoren aufbereitet. Vorteilhafterweise werden der Partikeldispersion Pigmentverteiler oder sonstige Dispergierhilfsstoffe zugemischt. In Weiterführung des Verfahrens wird die Mischung aus PVDC- und Partikeldispersion als oberste Schicht auf ein bahnförmiges Material aufgetragen und getrocknet.

Insbesondere werden eine PVDC-Dispersion mit 5 bis 80 Gew.-% PVDC und eine Partikeldispersion mit 10 bis 95 Gew.-% Partikeln miteinander gemischt.

Die weitere Ausgestaltung des Verfahrens ergibt sich aus den Patentansprüchen 19 bis 21.

Die Beschichtung wird zum Beschichten einer PVDC-Schicht eines Mehrschichtverbundes aus PVDC-Folie, Haftvermittler und Trägerfolie sowie eines Mehrschichtenverbundes aus PVDC-Folie, Haftvermittler, Polyethylen, Haftvermittler und Trägerfolie verwendet. Mit einer PVDC-Folie ist eine PVDC-Folie gemeint, auf die als Grundstrich bereits PVDC-Dispersion bei vorangegangenen Arbeitsgängen aufgetragen wurde. Weitere Mehrschichtverbunde mit PVDC beschichteten Folien sind PVC/PE/PVDC/PVDC+HDPE/PE/PVC; PVC/COC/PVDC/- PVDC+HDPE; PVC/PVDC/PVDC+HDPE/PE. Derartige Folien finden u. a. Anwendung zur Herstellung von Blisterverpackungen.

Durch die Einlagerung von Polymerpartikeln, vorzugsweise von HDPE- Micronisaten, in die oberste Polyvinylidenchloridcopolymer-Schicht von Verbundfolien, werden die voranstehend geschilderten Schwierigkeiten beseitigt oder stark verringert und die Herstellprozesse für diese Verbundfolien vereinfacht und effizienter. Diese Polymerpartikel dienen als Abstandshalter zwischen den Wicklungen einer Folie und verbessern die Gleiteigenschaften der PVDC-Oberfläche der Folienbahn.

Als für diese Partikel geeignete Polymere im flüssigen und pulverförmigen Zustand kommen solche in Frage, die mit der jeweiligen PVDC-Dispersion gut verträglich sind, nicht abrasiv wirken und insbesondere nicht wesentlich härter sind als die PVDC-Beschichtung oder die Unterseite der Träger- oder Basisfolie, auf welche die PVDC-Beschichtung aufgetragen wird. Sind die Partikel härter als die übrigen Folienoberflächen eines Verbundes, sollte die Oberfläche der Partikel möglichst glatt und im Idealfall sphärisch sein. Idealerweise haben die Partikeln einen möglichst geringen Haft- und Gleitreibungskoeffizienten. Die Partikel sollen bei den für die PVDC-Trocknung üblichen Trocknungstemperaturen von bis zu 100 °C nicht filmbildend sein und mit dem PVDC während des Trocknens nicht "verschmelzen", also nicht einen homogenen PVDC/Partikelpolymerfilm bilden. Stattdessen sollen die Polymerpartikel aus der PVDC-Schicht hervorstehen und so ihre Abstandshalterfunktion erfüllen. Zusätzlich soll das Partikelmaterial einen ähnlichen Brechungsindex wie PVDC aufweisen, so dass eine möglichst geringe Trübung in der PVDC-Partikelschicht auftritt. Die Dichte des Partikelmaterials liegt im Bereich von 0,1 bis 2,0 g/cm$^3$, insbesondere im Bereich von kleiner/gleich 1,30 g/cm$^3$ und bevorzugt ist sie kleiner als 1 g/cm$^3$, so dass ein Aufschwimmen in der Partikeldispersion und damit das Herausragen aus der PVDC-Oberfläche begünstigt wird. Zweckmäßigerweise ist der größte Partikeldurchmesser gleich/größer als die Dicke der Beschichtung. Der mittlere Teilchendurchmesser der Partikel muss auch auf das Auftragssystem abgestimmt sein, damit Ungleichmäßigkeiten im Partikelgehalt wegen zu großer Teilchen oder inhomogener Auftrag nicht auftreten können. Um die Barrierewirkung der PVDC-Beschichtung nicht negativ zu beeinflussen, dürfen die Partikel nicht porös sein. Die Barrierewirkung muss im Anwendungsbereich der Verbundfolie bzw. des Verbundes möglichst hoch sein.

Als Partikel kommen prinzipiell alle Polymere in Frage, die obige Bedingungen ganz oder teilweise erfüllen, zum Beispiel: HDPE, LDPE, LLDPE, PP, PVDC, PVC, Polyamide, Polyurethane, Polyacrylate, Polystyrole, Polyacrylnitrile, ABS, PTFE, Hartwachse, Kunstharze u.a., sowie Gemische und Copolymerisate hiervon. Ebenso können Partikel verwendet werden, die eine geeignete Oberflächenbeschichtung tragen. Die Kernmaterialien solcher beschichteter Partikel sind beispielsweise Polymere aus obiger Auflistung, sowie Naturstoffe wie Cellulose, natürliche Wachse, Poly(hydroxyalkansäuren), Schellack, modifizierte Naturstoffe wie Caseinderivate und Caseinkondensate, Cellulosederivate wie beispielsweise Celluloseacetate und Cellulosenitrate oder anorganische Stoffe wie z.B. Siliziumdioxid, Silicate, Aluminiumoxid, Titandioxid. Als Überzugsmaterialien sind oben genannte Polymere oder entsprechend geeignete, andere Oberflächencoatings wie Silane, Siloxane, Ormocere (organisch modifizierte Keramik), Keramikmaterialien verwendbar.

Auch sind Partikel verwendbar, die rein anorganischer Natur sind, wie z.B. Siliziumdioxid, Silicate, Aluminiumoxid, Titandioxid, und die die voranstehend angeführten Eigenschaften besitzen.

Sind die Partikel polymeren Ursprungs, können sie durch Polymerisation, Polykondensation, Polyaddition, polymeranaloge Umsetzung oder Mischung vorgefertigter Polymerer hergestellt werden. Die Partikelform und Zerteilung wird üblicherweise entweder direkt bei der Polymerisation, z.B. Suspensions- oder Emulsionspolymerisationen oder durch nachträgliches mechanisches Zerteilen und/oder Aufschlämmen und Stabilisieren in einer Trägerflüssigkeit vorgenommen. Anorganische Partikel können beispielsweise durch Vermahlen von Naturstoffen oder synthetisch hergestellt werden. Auf solche Partikel können Oberflächenbeschichtungen aufgetragen werden.

Bei der Anwendung von Partikeln liegt der prozentuale Anteil der Partikel an der trockenen Beschichtung üblicherweise im Bereich von 0,1 Gew.-% bis 10 Gew.-%. Für Partikel in Gestalt von HDPE-Micronisaten erweist sich beispielsweise ein Trockenanteil von ca. 0,2 bis 2 Gew.-% Micronisaten an der trockenen Beschichtungsmasse als besonders wirksam.

Zur Herstellung solcher Partikel enthaltenden PVDC-Beschichtungen wird die PVDC-Dispersion vor dem Auftragen auf ein bahnförmiges Material mit einer entsprechenden Menge der Partikelaufschlämmung oder -dispersion unter Rühren gemischt, bis die Aufschlämmung bzw. Dispersion homogen mit der PVDC-Dispersion vermischt ist. Hierzu wird ein handelsüblicher, nicht scherender Rührer, z.B. ein Propellerrührer, eingesetzt. Anschließend wird die Mischung mit einem für PVDC-Beschichtungen üblichen Auftragswerk auf das zu beschichtende Material aufgetragen und getrocknet. Ist die Teilchengröße richtig gewählt und die Verträglichkeit mit der PVDC-Dispersion gegeben, so ist bezüglich des Beschichtungs- und/oder Trocknungsverhaltens kein Unterschied zu unmodifizierter PVDC-Dispersion feststellbar. Das fertig beschichtete Material zeichnet sich durch folgende wesentliche Verfahrens- und Produktvorteile aus:

- Die Haft-und Gleitreibung der Oberfläche des beschichteten Materials ist besonders im frisch beschichteten Zustand wesentlich geringer als die der unmodifizierten PVDC-Beschichtung.
- Die Blocktendenz von frisch beschichtetem Material ist, obwohl die PVDC-Oberfläche nicht strukturiert ist, deutlich reduziert. Dabei ist mit "nicht strukturiert" eine Oberfläche zu verstehen, aus der Partikel herausragen, jedoch weder Wellentäler noch Wellenberge die Oberfläche formen bzw. bilden.
- Blockspuren durch Abdrücke der Rückseite der nächsten Folienwicklung auf der Folienrolle sind stark reduziert oder fehlen ganz.
- Trotz fehlender Oberflächenstrukturierung ist durch den Abstandshaltereffekt der Partikel eine Entlüftung der Folien - bzw. Materialrolle gewährleistet. Eingeschlossene Luft kann zu Folien- bzw. Materialdeformationen und wegen der Blocktendenz frischen PVDCs zu einer ungleichmäßigen Oberflächenmattigkeit von Folien führen.
- Durch die verminderte Haftreibung der PVDC-Oberfläche können sich die durch die Relaxationsbewegungen des frisch beschichteten Rollenmaterials entstehenden, parallel zur Materialoberfläche gerichteten Scherkräfte, durch das Gleiten der PVDC-Oberfläche auf der nächsten Folienwicklung, besser entspannen. Dadurch werden Materialzerstörungen vermieden, die bei weniger gut gleitenden PVDC-Oberflächen durch die von den Scherkräften generierten Delaminationen zwischen der PVDC-Schicht und dem Basisträger hervorgerufen werden.
- Der Reibungswiderstand von PVDC-beschichteten Flachfolien an Maschinenteilen von Thermoformmaschinen, die zur Herstellung von Blistern aus den Flachfolien verwendet werden, erniedrigt sich. Dadurch werden Folieneinschnürungen durch zu hohe Bahnspannungen verringert oder ganz beseitigt.
- Die Abfüllung von tabletten- oder kapselformigem Packgut wird erheblich verbessert, da dieses durch die stark abgesenkten Haft- und Gleitreibungskoeffizienten besser in die Blisterkavitäten hineingleiten kann. Insbesondere Gelatinekapseln, neigen dazu, sich bei Verwendung von unmodifiziertem PVDC nicht in die Kavität zu gleiten, sich in der Kavität aufzustellen oder sogar aus der Kavität herauszuspringen. Dies führt in einer an die Abfüllstation unmittelbar anschließenden Siegelstation zu Verschmutzungen durch zerdrücktes Packgut und damit zu längeren Reinigungsprozeduren.
- Von Vorteil ist weiterhin, dass maschinenseitige zusätzliche Einrichtungen für eine Oberflächenstrukturierung und spezielle Abäufe nicht benötigt werden. Die Oberflächeneigenschaften sind ausschließlich rezepturabhängig und daher sicher einzustellen und gut reproduzierbar.
- Durch die Beschichtung wird eine glatte, ebene Oberfläche erzeugt, die ästhetisch ansprechender ist als eine strukturierte Oberfläche.
- Die ebene Oberfläche ermöglicht es, ein größeres Schichtvolumen als bei einer strukturierten Oberfläche für die oberste PVDC-Schicht einzustellen, da die maximal trockenbare Schichtdicke bei einer strukturieren Schicht durch die höchsten Stellen der Struktur, d. h. den Spitzen der Wellenberge vorgegeben ist, während bei einer ebenen Oberfläche die trockenbare Schichtdicke gleich groß wie die maximal trockenbare Schichtdicke der strukturierbaren Schicht ist, jedoch im Gegensatz zu dieser keine Wellentäler aufweist, sondern eine durchgehend konstante Schichtdicke besitzt.

Es ist auch von Vorteil, dass sich eine derartig modifizierte Oberfläche als sehr gleitfreudig gegenüber der Rückseite der beschichteten Folie und gegenüber den Kavitäten des Formwerkzeuges erweist. Dies führt dazu, dass zum einen eine Entstapelung, der mit den Kavitäten ineinander gestapelten, fertig geformten, noch unbefüllten Blisterfolien - beispielsweise in Form von zurechtgeschnittenen Blisterformatstücken - oder zum anderen das Herauslösen der frisch geformten Blisternäpfe aus dem Tiefziehwerkzeug - vorausgesetzt, die modifizierte PVDC-Seite wird auf der Außenseite des Blisternapfes verwendet - mit einem deutlich geringeren Widerstand/Kraftaufwand möglich ist. Im ersten Fall führt das zu einem schnelleren Entstapeln und damit einer Produktivitätssteigerung, im zweiten Fall zu einem störungsfreieren Betrieb der Blistermaschine und somit zu einer Ausstoßsteigerung.

Die Erfindung wird anhand der Zeichnungen näher erläutert. Es zeigen:

Fig. 1    in schematischer Schnittdarstellung eine übliche PVDC-Beschichtung einer Verbundfolie aus PVDC-Folie/Trägefolie mit strukturierter PVDC-Oberfläche, und

Fig. 2    in schematischer Schnittdarstellung eine erfindungsgemäße Beschichtung aus PVDC, versetzt mit Partikeln, auf einer Verbundfolie aus PVDC-Folie/Trägerfolie.

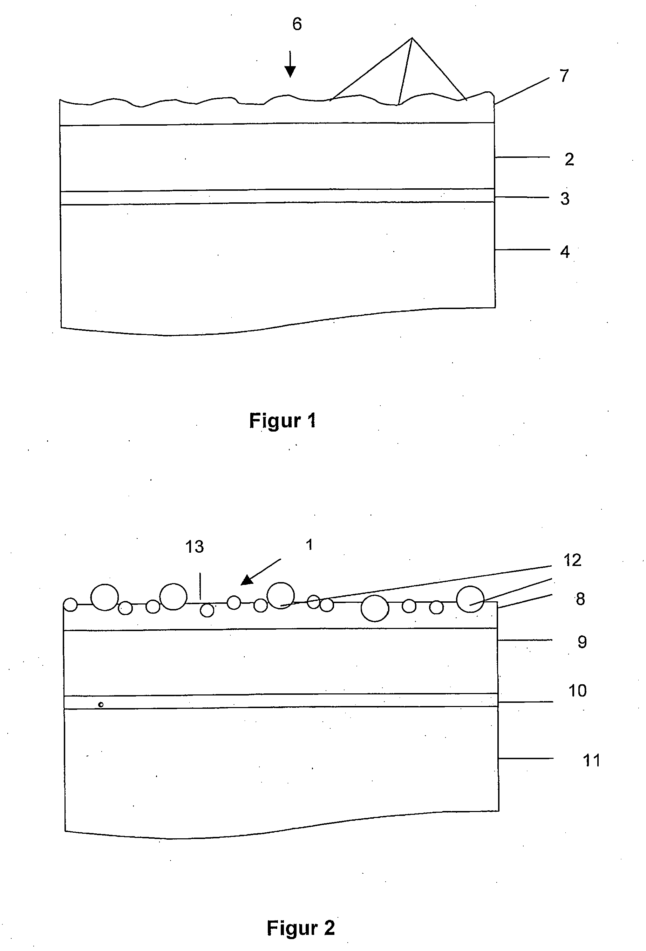

Die in Figur 1 im Querschnitt gezeigte Verbundfolie 6 umfasst eine Träger- oder Basisfolie 4, einen Haftvermittler 3 und eine PVDC-Folie 2. Der Haftvermittler 3 stellt den Verbund der PVDC-Folie 2 mit der Trägerfolie 4 her. Auf der Oberseite der PVDC-Folie 2 ist eine PVDC-Beschichtung 7 aufgebracht, die eine strukturierte Oberfläche 5 aufweist, so dass die Schichtdicke der PVDC-Beschichtung über die Breite der Verbundfolie 6 ungleichmäßig ist und Wellenberge und Wellentäler enthält.

Die in Figur 2 im Querschnitt dargestellte Verbundfolie 1 besteht aus einer Träger- bzw. Basisfolie 11, einem Haftvermittler 10, einer PVDC-Folie 9 und einer Beschichtung 8 aus PVDC, in der Partikel 12 aus HDPE eingelagert sind. Die Partikel 12 haben unterschiedliche Teilchendurchmesser, die mittlere Teilchengröße beträgt 6 bis 8 $\mu$m und ist für eine HDPE-Dispersion geeignet, die zu einer bis zu 6 $\mu$m dicken Beschichtung führt. Die größten Partikel haben einen Durchmesser von etwa 12 $\mu$m.

Für eine Schichtdicke von 12 $\mu$m liegt die mittlere Partikelgröße bei 12 bis 13 $\mu$m. Die größten Partikel sind etwa 17 $\mu$m groß. Eine Anzahl von Partikeln 12 ragen aus der ebenen Oberfläche 13 der Beschichtung 8 hervor und wirken als Abstandshalter zwischen den aneinander grenzenden Wicklungen einer aufgerollten Verbundfolie 1.

**Mischung einer PVDC-Dispersion mit einer HDPE-Dispersion**

Die nachstehenden Beispiele dienen der näheren Erläuterung der Erfindung, ohne dass dadurch der Schutzumfang der in den Ansprüchen charakterisierten Erfindung eingeschränkt werden soll. Es werden jeweils 1000 l Beschichtung aus PVDC-Dispersion und einer auf dem Markt erhältlichen oder frisch zubereiteten HDPE-Dispersion gemischt. Die PVDC-Dispersion hat einen Anteil von 55 Gew-% PVDC, bezogen auf die Gesamtmasse der PVDC-Dispersion und eine Dichte von 1.29 g/cm$^3$. In der HDPE-Dispersion beträgt der HDPE-Anteil 65 Gew-%, bezogen auf die Gesamtmasse der HDPE-Dispersion und die Dichte 0.96 g/cm$^3$.

In einem 1000 l fassenden Behälter wird die gewünschte Menge PVDC-Dispersion vorgelegt und gleichmäßig gerührt. Die berechnete Menge an HDPE-Dispersion wird während des nicht schaumbildenden Rührens der PVDC-Dispersion in dünnem Strahl hinzu gegeben und die Mischung weitere 5 bis 10 Minuten gerührt. Als HDPE-Dispersion kann entweder eine fertige, auf dem Markt erhältliche Dispersion oder ein frisch bereitetes Dispergat eines HDPE-Pulvers, das durch entprechendes Einrühren des Partikelpulvers in Wasser mit oder ohne Hilfe eines oder mehrerer Emulgatoren, von Pigmentverteiler oder anderen Dispergierhilfsstoffen, von anionischen Tensiden, verwendet werden. Möglich ist auch die direkte Zugabe eines HDPE-Pulvers in die PVDC-Dispersion, wobei insbesondere darauf geachtet werden muss, dass es nicht zu Verklumpungen kommt, die ungleichförmige Beschichtungsdicken verursachen können.

**Beispiel 1**

Der Anteil der HDPE-Dispersion betrug 1 Vol-%, bezogen auf das Gesamtvolumen (in Liter) der Beschichtung. Die zugehörigen Gewichtsanteile $\chi$ des PVDCs und des HDPEs im getrockneten Film werden wie folgt berechnet:

$$\chi_{PVDC} = 100 \cdot \frac{V_{PVDC} \cdot \rho_{PVDC} \cdot FK_{PVDC}}{V_{PVDC} \cdot \rho_{PVDC} \cdot FK_{PVDC} + V_{PE} \cdot \rho_{PE} \cdot FK_{PE}}$$

$$\chi_{PE} = 100 \cdot \frac{V_{PE} \cdot \rho_{PE} \cdot FK_{PE}}{V_{PVDC} \cdot \rho_{PVDC} \cdot FK_{PVDC} + V_{PE} \cdot \rho_{PE} \cdot FK_{PE}}$$

$\chi_{PVDC}$    PVDC-Anteil der getrockneten Beschichtung in Gew.-%
$\chi_{PE}$    HDPE-Anteil der getrockneten Beschichtung in Gew.-%
$V_{PDdC}$    eingesetztes Volumen der PVDC-Dispersion
$V_{PE}$    eingesetztes Volumen der HDPE-Dispersion
$\rho_{PVDC}$    Dichte der PVDC-Dispersion

| | |
|---|---|
| $\rho_{PE}$ | Dichte der HDPE-Dispersion |
| $FK_{PVDC}$ | Festkörperanteil der PVDC-Dispersion in Gew.-% |
| $FK_{PE}$ | Festkörperanteil der HDPE-Dispersion in Gew.-% |

| Komponente | Dispersionsmenge (l) | Anteil trocken, $\chi$, Gew.-% |
|---|---|---|
| PVDC-Dispersion | 990 | 99,12 |
| HDPE-Dispersion | 10 | 0,88 |

**Beispiel 2**

Der Anteil der HDPE-Dispersion betrug 2 Vol-%, bezogen auf das Gesamtvolumen (in Liter) der Beschichtung

| Komponente | Dispersionsmenge (l) | Anteil trocken, $\chi$, Gew.-% |
|---|---|---|
| PVDC-Dispersion | 980 | PVDC 98,24 |
| HDPE-Dispersion | 20 | HDPE 1,76 |

Im Folgenden sind die gemessenen Haft- und Gleitreibungskoeffizienten einer herkömmlichen Verbundfolie mit reiner PVDC-Beschichtung, wie sie anhand Figur 1 beschrieben ist, und der Folien gemäß den Beispielen 1 und 2 einander gegenüber gestellt. Die Reibungskraftmessung erfolgte mit einem Prüfkörper aus Aluminium, der mit Hartgelatine beschichtet ist.

Die Messbedingungen waren wie folgt:

| | |
|---|---|
| Probekörpergeschwindigkeit: | 5 mm/min |
| Masse Probekörper: | 200 g |
| Material: | Aluminium, eloxiert |
| Beschichtung Probekörper: | Hartgelatine |
| Luftfeuchte: | 50 % r.h. |
| Methode: | analog ASTM D 1894 |
| Alter der PVDC-Beschichtungen der drei Folien jeweils: | 10 Tage |

| Material | Haftreibungskoeffizient | Gleitreibungskoeffizient |
|---|---|---|
| PVDC ohne Partikel, jedoch mit Oberflächenstruktur | 1,04 | Nicht messbare, da eine kontinuierliche Bewegung nicht auftritt |
| PVDC mit 1 Vol-% HDPE | 0,41 | 0,21 |
| PVDC mit 2 Vol-% HDPE | 0,29 | 0,19 |

Es zeigt sich eine starke indirekte Abhängigkeit des Haftreibungskoeffizienzen vom HDPE-Anteil in der erfindungsgemäßen Beschichtung. Mit steigendem HDPE-Anteil wird der Haft-reibungskoeffizient kleiner. Mit der Formel $((HRK_{OP} - HRK_P)/HRK_{OP}) \times 100\%$, in der $HRK_{OP}$ der Haftreibungskoeffizient der PVDC beschichteten Verbundfolie ohne Partikel in der PVDC-Beschichtung ist und $HRK_P$ der Haftreibungskoeffizient der PVDC beschichteten Verbundfolie mit Partikeln in der PVDC-Beschichtung ist, ergeben sich Reduzierungen des Haftreibungkoeffizienten $HRK_P$ um 61 % und 72 % bei einem HDPE-Volumenanteil von 1 % bzw. 2 %.

**Verarbeitung der Verbundfolien**

Bei der Verarbeitung werden folgende Vorteile gegenüber PVDC-Beschichtungen, die keine Partikel enthalten, erzielt:

- Besseres Ausformen aus der Blistertiefziehform, wenn die PVDC beschichtete Verbundfolie mit der PVDC-Beschichtung außen verarbeitet wird.
- Geringeres Einschnüren der Folienbahn auf Grund von geringerem Reibungswiderstand gegenüber Maschinenteilen.
- Bessere Abfülleigenschaften von Gelatinekapseln in Blisterverpackungen gefertigt aus den Verbundfolien (PVDC-Seite zum Füllgut).
- Geringere Tendenz der Verbundfolien, an heißen Maschinenteilen festzukleben.

**Patentansprüche**

1. Verbundfolie (1), umfassend eine Trägerfolie (11), Haftvermittler (10), eine PVDC-Folie (9) und eine auf die PVDC-Folie (9) aufgetragene Beschichtung (8) auf Basis von Polyvinylidenchlorid, **dadurch gekennzeichnet, dass** Partikel (12) aus Polymeren, Naturstoffen, modifizierten Naturstoffen, anorganischen Materialien oder Mischungen hiervon im Polyvinylidenchlorid der Beschichtung (8) enthalten sind, die Dichte der Partikel (12) im Bereich von 0,1 bis 2,0 g/cm$^3$ liegt, der mittlere Durchmesser der Partikel (12) 1 bis 100 $\mu$m beträgt, eine Anzahl der Partikel (12) aus der Beschichtung (8) herausragt und der größte Partikeldurchmesser gleich/größer als die Dicke der Beschichtung (8) ist.

2. Verbundfolie (1) nach Anspruch 1, **dadurch gekennzeichnet, dass** die Dichte der Partikel (12) kleiner/gleich 1,30 g/cm$^3$, insbesondere kleiner/gleich 1 g/cm$^3$ ist.

3. Verbundfolie (1) nach Anspruch 1. **dadurch gekennzeichnet, dass** die Partikel (12) aus einer Gruppe enthaltend HDPE, LDPE, LLDPE, Polypropylen, PVC, PVDC, Polyamide, Polyurethane, Polyacrylate, Polystyrole, Polyacrylnitrile, Acrylnitril-Butadien-Styrol-Polymerisate (ABS), Polytetrafluorethylen (PTFE), Kunstharze, Hartwachse, Gemische und Copolymerisate hiervon, ausgewählt sind.

4. Verbundfolie (1) nach Anspruch 3, **dadurch gekennzeichnet, dass** die Partikel (12) eine Oberflächenbeschichtung aus einem der Polymeren der Gruppe HDPE, LDPE, LLDPE, Polypropylen, PVC, PVDC, Polyamide, Polyurethane, Polyacrylate, Polystyrole, Polyacrylnitrile, Acrylnitril-Butadien-Styrol-Polymerisate (ABS), Polytetrafluorethylen (PTFE), Kunstharze, Hartwachse, Gemische und Copolymerisate hiervon, aufweisen.

5. Verbundfolie (1) nach Anspruch 4, **dadurch gekennzeichnet, dass** die Partikel (12) einen Trockenanteil von 0,1 bis 10 Gew.-%, bezogen auf das PVDC-Trockengewicht haben.

6. Verbundfolie (1) nach Anspruch 5, **dadurch gekennzeichnet, dass** die Partikel (12) einen Trockenanteil von 0,3 bis 8 Gew.-%, bezogen auf das PVDC-Trockengewicht haben.

7. Verbundfolie (1) nach Anspruch 5, **dadurch gekennzeichnet, dass** die Partikel (12) einen Trockenanteil von 0,2 bis 2 Gew.-%, bezogen auf das PVDC-Trockengewicht, aufweisen.

8. Verbundfolie (1) nach Anspruch 1, **dadurch gekennzeichnet, dass** die Partikel (12) in Pulverform in das PVDC eingebracht sind.

9. Verbundfolie (1) nach Anspruch 1, **dadurch gekennzeichnet, dass** die Beschichtung (8) flüssig ist und aus einer Mischung einer anionischen PVDC-Dispersion und einer anionischen Dispersion aus micronisierten Partikeln besteht.

10. Verbundfolie (1) nach Anspruch 9, **dadurch gekennzeichnet, dass** die anionische Dispersion aus micronisierten Partikeln, einem oder mehreren Emulgatoren, anionischen Tensiden, Pigmentverteilern und Dispergierhilfsstoffen besteht.

11. Verbundfolie (1) nach Anspruch 3, **dadurch gekennzeichnet, dass** die Partikel (12) aus HDPE bestehen.

12. Verfahren zur Herstellung einer Verbundfolie nach einem der Ansprüche 1 bis 11, umfassend die Bereitstellung eines bahnförmigen Materials umfassend eine Trägerfolie, Haftvermittler und eine PVDC-Folie und Beschichten der PVDC-Folie mit einer Dispersion auf Basis von Polyvinylidenchlorid, **dadurch gekennzeichnet, dass** eine PVDC-Dispersion vorgelegt wird, in die Partikel direkt oder eine Partikeldispersion unter Rühren zudosiert werden bzw. wird.

**13.** Verfahren nach Anspruch 12, **dadurch gekennzeichnet, dass** die Partikeldispersion durch Einrühren eines Partikelpulvers in Wasser ohne oder mit einem oder mehreren Emulgatoren aufbereitet wird.

**14.** Verfahren nach Anspruch 12, **dadurch gekennzeichnet, dass** der Partikeldispersion Pigmentverteiler oder sonstige Dispergierhilfsstoffe zugemischt werden.

**15.** Verfahren nach Anspruch 12, **dadurch gekennzeichnet, dass** die Mischung aus PVDC-und Partikeldispersion als oberste Schicht auf das bahnförmige Material aufgetragen und getrocknet wird.

**16.** Verfahren nach Anspruch 15, **dadurch gekennzeichnet, dass** eine PVDC-Dispersion mit 5 bis 80 Gew.-% PVDC und eine Partikeldispersion mit 10 bis 90 Gew.-% Partikeln miteinander gemischt werden.

**17.** Verfahren nach Anspruch 16, **dadurch gekennzeichnet, dass** eine PVDC-Dispersion mit 30 bis 70 Gew.-% PVDC und eine Partikeldispersion mit 40 bis 70 Gew.-% Partikeln miteinander gemischt werden.

**18.** Verfahren nach Anspruch 15, **dadurch gekennzeichnet, dass** 80 bis 99 Gew.-% PVDC-Dispersion und 1 bis 20 Gew.-% Partikeldispersion miteinander gemischt werden.

**19.** Verfahren nach Anspruch 17, **dadurch gekennzeichnet, dass** die Partikeldispersion eine PVDC-HDPE-Dispersion mit einem Trockenanteil von 0,50 bis 3,0 Gew.-% HDPE an der Mischung aus PVDC- und HDPE-Dispersion ist.

**20.** Verbundfolie (1) nach einem der Ansprüche 1 bis 11, **dadurch gekennzeichnet, dass** die Partikel (12) enthaltende Beschichtung (8) auf eine PVDC-Folie eines Mehrschichtverbundes aus PVDC-Folie, Haftvermittler, Polyethylenfolie, Haftvermittler, Trägerfolie; PVDC-Folie, Haftvermittler, Cycloolefincopolymer (COC), Haftvermittler, PVC; oder PVDC-Folie, Haftvermittler, PE, Haftvermittler, PVC aufgetragen ist.

**21.** Verwendung der Verbundfolie (1) nach einem der Ansprüche 1 bis 11 in einem Mehrschichtverbund aus PVC/PE/PVDC-Folie/PVDC + HDPE/PE/PVC.

**Claims**

**1.** Composite film (1), comprising a carrier film (11), an adhesion promoter (10), a PVDC film (9) and a coating (8) based on PVDC applied onto the PVDC film (9), **characterized in that** particles made of polymers, natural substances, modified natural substances, anorganic materials or mixtures thereof are contained in the polyvinylidene chloride of the coating (8), the density of the particles (12) is in the range of from 0.1 to 2.0 g/cm$^2$, the mean diameter of the particles (12) is 1 to 100 $\mu$m, a number of particles (12) protrudes out of the coating (8), and the largest particle diameter is equal to/larger than the thickness of the coating (8).

**2.** Composite film (1) according to claim 1, **characterized in that** the density of the particles (12) is smaller than/equal to 1.30 g/cm$^3$, especially smaller than/equal to 1 g/cm$^3$.

**3.** Composite film (1) according to claim 1, **characterized in that** the particles (12) are selected from a group comprising HDPE, LDPE, LLDPE, polypropylene, PVC, PVDC, polyamides, polyurethanes, polyacrylates, polystyrenes, polyacrylonitriles, acrylonitrile butadiene styrene polymerizates (ABS), polytetrafluoroethylene (PTFE), synthetic resins, hard waxes, as well as mixtures and copolymerizates thereof.

**4.** Composite film (1) according to claim 3, **characterized in that** the particles have a surface coating made of one of the polymers of the group HDPE, LDPE, LLDPE, polypropylene, PVC, PVDC, polyamides, polyurethanes, polyacrylates, polystyrenes, polyacrylonitriles, acrylonitrile butadiene styrene polymerizates (ABS), polytetrafluoroethylene (PTFE), synthetic resins, hard waxes, as well as mixtures and copolymerizates thereof.

**5.** Composite film (1) according to claim 4, **characterized in that** the particles (12) have a dry portion from 0.1 to 10 wt% of the PVDC dry weight.

**6.** Composite film (1) according to claim 5, **characterized in that** the particles (12) have a dry portion of 0.3 to 8 wt% of the PVDC dry weight.

**7.** Composite film (1) according to claim 5, **characterized in that** the particles (12) feature a dry portion of 0.2 to 2 wt% of the PVDC dry weight.

**8.** Composite film (1) according to claim 1, **characterized in that** the particles (12) are added to the PVDC in powder form.

**9.** Composite film (1) according to claim 1, **characterized in that** the coating (8) is liquid and consists of a mixture of an anionic PVDC dispersion and an anionic dispersion made of micronized particles.

**10.** Composite film (1) according to claim 9, **characterized in that** the anionic dispersion consists of micronized particles, one or several emulsifying agents, anionic tensides, pigment dispersers and dispersion additives.

**11.** Composite film (1) according to claim 3, **characterized in that** the particles (12) consist of HDPE.

**12.** Process for the manufacture of a composite film according to any one of claims 1 to 11, comprising providing a carrier film, an adhesion promoter and PVDC film and coating the PVDC film with a dispersion based on polyvinylidene chloride, **characterized in that** a PVDC dispersion is provided into which the particles are fed directly or into which a particle dispersion is fed while stirring.

**13.** Process according to claim 12, **characterized in that** the particle dispersion is prepared by stirring a particle powder into water without, or with one or several emulsifying agents.

**14.** Process according to claim 12, **characterized in that** pigment dispersers or other dispersion-promoting additives are admixed with the particle dispersion.

**15.** Process according to claim 12, **characterized in that** the mixture consisting of PVDC and particle dispersion is applied as the top layer onto a sheet-formed material and dried.

**16.** Process according to claim 15, **characterized in that** a PVDC dispersion with 5 to 80 wt% PVDC and a particle dispersion with 10 to 90 wt% particles are mixed together.

**17.** Process according to claim 16, **characterized in that** a PVDC dispersion with 30 to 70 wt% PVDC and a particle dispersion with 40 to 70 wt% particles are mixed together.

**18.** Process according to claim 15, **characterized in that** a 80 to 99 wt% PVDC dispersion and a 1 to 20 wt% particle dispersion are mixed together.

**19.** Process according to claim 17, **characterized in that** the particle dispersion is a PVDC-HDPE dispersion with a dry portion of 0.50 to 3.0 wt% HDPE of the mixture of PVDC and HDPE dispersion.

**20.** Composite film (1) according to any one of claims 1 to 11, **characterized in that** the coating (8) containing the particles (12) is coated onto a PVDC film of a multilayer composite made up of PVDC film, adhesion promoter, polyethylene film, adhesion promoter, carrier film; PVDC film, adhesion promoter, cycloolefin copolymer (COC), adhesion promoter, PVC; or PVDC film, adhesion promoter, PE, adhesion promoter, PVC.

**21.** Use of the composite film (1) according to any one of claims 1 to 11 in a multiple layer composite made of PVC/PE/PVDC film/PVDC + HDPE/PE/PVC.

**Revendications**

**1.** Feuille composite (1) comprenant une feuille de support (11), un agent adhésif (10), une feuille de PVDC (9) et un revêtement (8) appliqué sur la feuille de PVDC (9) à base de chlorure de polyvinylidène, **caractérisée en ce que** des particules (12) de polymères, substances naturelles, substances naturelles modifiées, matériaux anorganiques ou mélanges de ceux-ci sont contenues dans le chlorure de polyvinylidène du revêtement (8), la densité des particules (12) est comprise dans la plage de 0,1 à 2 g/cm$^3$, le diamètre moyen des particules (12) est compris entre 1 et 100 μm, un nombre de particules (12) sort du revêtement (8) et le diamètre de particules le plus grand est égal ou supérieur à l'épaisseur du revêtement (8).

**2.** Feuille composite (1) selon la revendication 1, **caractérisée en ce que** la densité des particules (12) est inférieure ou égale à 1,30 g/cm$^3$, en particulier inférieure ou égale à 1 g/cm$^3$.

**3.** Feuille composite (1) selon la revendication 1, **caractérisée en ce que** les particules (12) sont sélectionnées dans un groupe contenant du HDPE, LDPE, LLDPE, polypropylène, PVC, PVDC, polyamide, polyuréthane, polyacrylate, polystyrène, polyacrylonitrile, des polymères d'acrylonitrile-butadiène-styrène (ABS), du polytétrafluoroéthylène (PTFE), des résines synthétiques, des cires dures, des mélanges et des copolymères de ceux-ci.

**4.** Feuille composite (1) selon la revendication 3, **caractérisée en ce que** les particules (12) présentent un revêtement de surface en un des polymères du groupe HDPE, LDPE, LLDPE, polypropylène, PVC, PVDC, polyamide, polyuréthane, polyacrylate, polystyrène, polyacrylonitrile, polymères d'acrylonitrile-butadiène-styrène (ABS), polytétrafluoroéthylène (PTFE), résines synthétiques, cires dures, mélanges et copolymères de ceux-ci.

**5.** Feuille composite (1) selon la revendication 4, **caractérisée en ce que** les particules (12) ont une part sèche de 0,1 à 10% en poids par rapport au poids sec du PVDC.

**6.** Feuille composite (1) selon la revendication 5, **caractérisée en ce que** les particules (12) ont une part sèche de 0,3 à 8% en poids par rapport au poids sec du PVDC.

**7.** Feuille composite (1) selon la revendication 5, **caractérisée en ce que** les particules (12) ont une part sèche de 0,2 à 2% en poids par rapport au poids sec du PVDC.

**8.** Feuille composite (1) selon la revendication 1, **caractérisée en ce que** les particules (12) sont introduites sous la forme de poudre dans le PVDC.

**9.** Feuille composite (1) selon la revendication 1, **caractérisée en ce que** le revêtement (8) est liquide et se compose d'un mélange d'une dispersion de PVDC anionique et d'une dispersion anionique de particules micronisées.

**10.** Feuille composite (1) selon la revendication 9, **caractérisée en ce que** la dispersion anionique se compose de particules micronisées, d'un ou de plusieurs émulsifiants, d'agents tensioactifs anioniques, de diffuseurs de pigment et de substances auxiliaires de dispersion.

**11.** Feuille composite (1) selon la revendication 3, **caractérisée en ce que** les particules (12) se composent d'HDPE.

**12.** Procédé de fabrication d'une feuille composite selon l'une quelconque des revendications 1 à 11, comprenant la mise à disposition d'un matériau en forme de bande comprenant une feuille de support, un agent adhésif et une feuille de PVDC et le revêtement de la feuille de PVDC avec une dispersion à base de chlorure de polyvinylidène, **caractérisé en ce qu'**une dispersion de PVDC est soumise, dans laquelle des particules sont ajoutées par dosage directement ou une dispersion de particules est ajoutée par dosage en remuant.

**13.** Procédé selon la revendication 12, **caractérisé en ce que** la dispersion de particules est préparée par délayage d'une poudre de particules dans l'eau sans ou avec un ou plusieurs émulsifiants.

**14.** Procédé selon la revendication 12, **caractérisé en ce que** des diffuseurs de pigment ou autres substances auxiliaires de dispersion sont mélangés à la dispersion de particules.

**15.** Procédé selon la revendication 12, **caractérisé en ce que** le mélange composé de la dispersion de PVDC et de particules est appliqué et séché comme couche supérieure sur le matériau en forme de bande.

**16.** Procédé selon la revendication 15, **caractérisé en ce qu'**une dispersion de PVDC avec 5 à 80% en poids de PVDC et une dispersion de particules avec 10 à 90% en poids de particules sont mélangées entre elles.

**17.** Procédé selon la revendication 16, **caractérisé en ce qu'**une dispersion de PVDC avec 30 à 70% en poids de PVDC et une dispersion de particules avec 40 à 70% en poids de particules sont mélangées entre elles.

**18.** Procédé selon la revendication 15, **caractérisé en ce que** 80 à 99% en poids de dispersion de PVDC et 1 à 20% en poids de dispersion de particules sont mélangés entre eux.

**19.** Procédé selon la revendication 17, **caractérisé en ce que** la dispersion de particules est une dispersion de PVDC et d'HDPE avec une part sèche de 0,5 à 3% en poids d'HDPE sur le mélange de dispersion de PVDC et d'HDPE.

**20.** Feuille composite (1) selon l'une quelconque des revendications 1 à 11, **caractérisée en ce que** le revêtement (8) contenant des particules (12) est appliqué sur une feuille de PVDC d'un composite à plusieurs couches constitué d'une feuille de PVDC, d'un agent adhésif, d'une feuille de polyéthylène, d'un agent adhésif, d'une feuille de support ; d'une feuille de PVDC, d'un agent adhésif, d'un copolymère de cyclooléfine (COC), d'un agent adhésif, d'un PVC ; ou d'une feuille de PVDC, d'un agent adhésif, d'un PE, d'un agent adhésif, d'un PVC.

**21.** Utilisation de la feuille composite (1) selon l'une quelconque des revendications 1 à 11 dans un composite à plusieurs couches constitué de PVC/PE/feuille de PVDC/PVDC + HDPE/PE/PVC.

**Figur 1**

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10064800 A1
- DE 4316025 A1
- EP 0403542 B1
- EP 0736067 B1
- DE 19832500 A1
- DE 2012349
- WO 9103518 A
- JP 57059756 A
- JP 57059757 A